# EUROPÄISCHE PATENTSCHRIFT

(11) **EP 2 831 454 B1**
(45) Veröffentlichungstag und Bekanntmachung des Hinweises auf die Patenterteilung: **28.12.2016**
(21) Anmeldenummer: 13710866.8
(22) Anmeldetag: 21.03.2013
(51) Int. Cl.: F16D 65/02

(54) **SCHEIBENBREMSE FÜR EIN NUTZFAHRZEUG**
DISC BRAKE FOR A UTILITY VEHICLE
FREIN À DISQUE POUR UN VÉHICULE UTILITAIRE

(30) Priorität: 26.03.2012 DE 102012102585
(43) Veröffentlichungstag der Anmeldung: 04.02.2015
(73) Patentinhaber: KNORR-BREMSE Systeme für Nutzfahrzeuge GmbH, 80809 München (DE)
(72) Erfinder: EICHLER, Thomas, 80809 München (DE); HABERL-GÜNTHNER, Paul, 94474 Aunkirchen (DE); WEBER, Ralf, 80992 München (DE); NESMJANOWITSCH, Igor, 94491 Hengersberg (DE)
(86) Internationale Anmeldenummer: PCT/EP2013/055920
(87) Internationale Veröffentlichungsnummer: WO 2013/143964

(56) Entgegenhaltungen:
- WO-A1-2013/143957
- DE-A1- 2 436 541
- DE-A1- 4 318 746
- DE-A1- 19 946 677
- DE-A1-102007 001 213

## Beschreibung

Die Erfindung betrifft eine Scheibenbremse für ein Nutzfahrzeug gemäß dem Oberbegriff des Anspruchs 1.

Im Funktionsfall, d. h. bei einer Bremsung, erfolgt eine Zuspannung der Bremsbeläge mittels einer Zuspanneinrichtung zunächst durch Andrücken des zuspannseitigen Bremsbelages gegen die Bremsscheibe und einem nachfolgenden Anpressen des gegenüberliegenden, reaktionsseitigen Bremsbelages.

Während der aktionsseitige Bremsbelag über Bremsstempel der Zuspanneinrichtung gegen die Bremsscheibe gepresst wird, wird zum Andrücken des reaktonsseitigen Bremsbelages der als Schiebesattel ausgebildete Bremssattel entgegen der Zuspanneinrichtung des aktionsseitigen Bremsbelages verschoben.

Nach einem Lösen der Bremse verbleibt bei der bekannten Scheibenbremse der Bremssattel in dieser letztgenannten Position, in der die Bremsbeläge, zumindest aber der reaktionsseitige, zwar drucklos, jedoch schleifend an der Bremsscheibe anliegt. Die dadurch im Fahrbetrieb auftretenden sogenannten Restschleifmomente führen zu einem erhöhten Kraftstoffverbrauch des Fahrzeugs ebenso wie zu einer Verringerung der Standzeit sowohl der Bremsscheibe wie auch der Bremsbeläge.

Ein geringes Lösen der Bremsbeläge erfolgt im Fahrbetrieb durch einen Taumelschlag der Bremsscheibe sowie durch Erschütterungen und Querbeschleunigungen bei Kurvenfahrten. Diese Effekte sind jedoch nicht ausreichend, um das genannte Schleifen wirksam zu verhindern.

Um diese Nachteile zu vermeiden, ist aus der DE 199 46 677 A1 eine Scheibenbremse bekannt mit einer Rückstelleinrichtung, die nach dem Lösen der Bremse, den Bremssattel in seine Ausgangsstellung zurückführt. Insbesondere um den reaktionsseitigen Bremsbelag in Nichtfunktionsstellung aus seinem Kontakt mit der Bremsscheibe zu führen, sind Federsysteme bekannt, die beim Zuspannen der Bremse vorgespannt werden. Nach einem Lösen werden die Bremsbeläge mit der durch die Vorspannung gespeicherten Federenergie zurück gedrückt bzw. weggezogen. Dabei können diese Federsysteme in ortsfesten Bauteilen, z. B. einem Bremsträger, verankert sein.

Allerdings ist die Rückstellung des Bremssattels ausschließlich abhängig vom Federweg des Rückstellelementes, was jedoch eine exakte Zurückführung auf ein immer gleiches Lüftspielmaß zwischen der Bremsscheibe und dem reaktionsseitigen Bremsbelag nicht ermöglicht, sodass die bekannte Scheibenbremse eine eher unbefriedigende Lösung des Problems darstellt.
Dies gilt gleichermaßen dann, wenn der reaktionsseitige Bremsbelag formschlüssig am Bremssattelrücken angebunden ist, da durch die im Gesamtsystem bleibenden Haltekräfte von sich relativ zueinander bewegenden Bauteilen nach einem Lösen der Bremse diese Bauteile von der Bremsscheibe weggedrückt werden müssen.

In der DE 24 36 541 A1 ist eine Scheibenbremse offenbart, die ein Rückstellelement aufweist, mit dem ein Bremsbelag nach einem Lösen der Bremse zurückgeholt wird. Dabei ist im Bremsbelag, d.h. der Belagträgerplatte und dem Reibbelag, eine definiert reibschlüssig gehaltene Spannhülse vorgesehen, in der ein Bolzen achsverschieblich und federbelastet geführt ist.
Der Erfindung liegt daher die Aufgabe zu Grunde, eine Scheibenbremse der gattungsgemäßen Art so weiter zu entwickelt, dass eine in Bezug auf das Lüftspiel gleichbleibende Rückstellung des Bremssattels gewährleistet ist, und auftretende Restschleifmomente minimiert werden.
Diese Aufgabe wird durch eine Scheibenbremse mit den Merkmalen des Anspruchs 1 gelöst.
Die Erfindung findet vornehmlich im reaktionsseitigen Bereich der Scheibenbremse Verwendung, ist aber durchaus auch im aktionsseitigen Bereich einsetzbar, und dort in der Funktionseinheit reaktionsseitiger Bremsbelag/Bremsstempel. In jedem Fall wird durch die Erfindung eine Reduzierung des Restschleifmomentes erreicht.

Gemäß der Erfindung ist im Bremsbelag, und zwar im Reibbelag ein in Achsrichtung der Bremsscheibe druckbelastet begrenzt verschiebbar gehaltenes Reibelement vorgesehen, das aus dem gleichen oder verschleißfesteren Material wie der Reibbelag selbst besteht. Zur behinderungsfreien axialen Bewegbarkeit des Reibelementes, ist dies in einer beispielsweise Gleithülse gelagert, die aus Metall- oder Keramik bestehen kann und fest mit dem Reibbelag oder der Belagträgerplatte verbunden ist.

Als weiterer Bestandteil der Rückstelleinrichtung ist ein in der Belagträgerplatte mit dem Reibelement axial verschiebbar gehaltener Stößel vorgesehen, der einerseits mit dem Reibelement fest verbunden ist und andererseits in Korrespondenz mit einem elastischen Druckelement steht, das im Bremssattel gehalten ist und das bevorzugt aus einer Druckfeder in Form von Tellerfedern, Blattfedern oder Schraubenfedern besteht. Denkbar ist allerdings auch als elastisches Druckelement eine Druckpatrone einzusetzen, deren Medium beim Zuspannen unter Druckaufbau komprimiert und beim Lösen der Zuspannung entspannt wird.

Das Druckelement kann unmittelbar auf den Stößel wirken, aber auch über ein Zwischenelement, vorzugsweise eine Kugel, die in der Art positioniert und gehalten ist, dass sie das Druckelement axial im Bremssattelrücken sichert und den Stößel gegen die Begrenzung in der Belagrückenplatte presst. Die Begrenzung ist beispielsweise auf 0,3 mm festgelegt und somit geringfügig weniger als der Hälfte des gewünschten Lüftspiels entspricht. Das Reibelement ragt mit einem geringfügig kleineren Überstand über den Reibbelag hinaus, wobei dieser Überstand kleiner als die Hälfte des genannten theoretischen Lüftspiels sein soll, beispielsweise 0,3 mm.

Bevorzugt sind mehrere, insbesondere zwei abständig zueinander angeordnete Reibelemente vorgesehen, die beim Zuspannen der Bremsen an die Bremsscheibe gepresst und plan mit der Reibbelagfläche positioniert sind, wobei durch die relative Axialverschiebung der Reibelemente und des Bremssattels, einschließlich des Bremsbelages das Druckelement gespannt wird.

Beim Lösen der Zuspannung wird durch die gespeicherte Federkraft das jeweilige Reibelement über den Stößel weiterhin gegen die Bremsscheibe gedrückt. Die Rückstellkraft der Feder bewirkt, dass der verschiebbar gelagerte Bremssattel sowie der verschiebbar gelagerte Bremsbelag von der Bremsscheibe weggeschoben werden. Idealerweise ist der Bremsbelag, also hier der reaktionsseitige Bremsbelag formschlüssig mit dem Bremssattelrücken verbunden.

Zwar bleibt ein geringes Restschleifmoment mit wenig geforderter Reibenergie erhalten, jedoch ist dies vernachlässigbar klein, da die Reibelemente mit sehr kleinen Kontaktflächen an der Bremsscheibe anliegen. Kurze Zeit nach dem Bremsvorgang stellt sich ein Gleichgewicht ein, das frei vom Restschleifen oder annähernd frei davon ist. In jedem Fall ist die verbleibende Andruckkraft derart gering, dass die zum Stand der Technik beschriebenen Probleme nicht mehr auftreten.

Weitere vorteilhafte Ausbildungen der Erfindung sind in den Unteransprüchen gekennzeichnet.

Ein Ausführungsbeispiel der Erfindung wird nachfolgend anhand der beigefügten Zeichnungen beschrieben. Es zeigen:

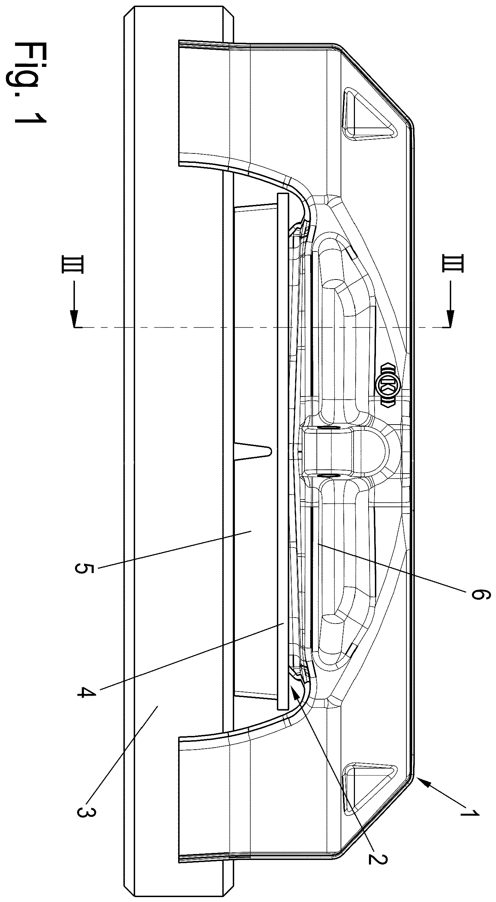

- Figur 1: einen Teil einer erfindungsgemäßen Scheibenbremse in einer Draufsicht;
- Figur 2: den Teil der Fig. 1 in einer Explosionsdarstellung;
- Figur 3: einen Schnitt durch die Scheibenbremse gemäß der Linie III-III in Fig. 1;
- Figur 4: einen vergrößerten Ausschnitt gemäß der Angabe IV in Fig. 3.

In den Figuren ist ein Bremssattelrücken 6 eines Bremssattels 1 einer Scheibenbremse dargestellt, in den ein Bremsbelag 2 eingelassen ist, der aus einer Belagträgerplatte 4 und einem darauf befestigten, einer Bremsscheibe 3 zugewandten Reibbelag 5 besteht, wobei bei einer Bremsung der Bremsbelag 2 mit seiner Reibbelagseite an die Bremsscheibe 3 gepresst wird. Hierzu liegt der Bremssattelrücken 6 an der Belagträgerplatte 2 an.

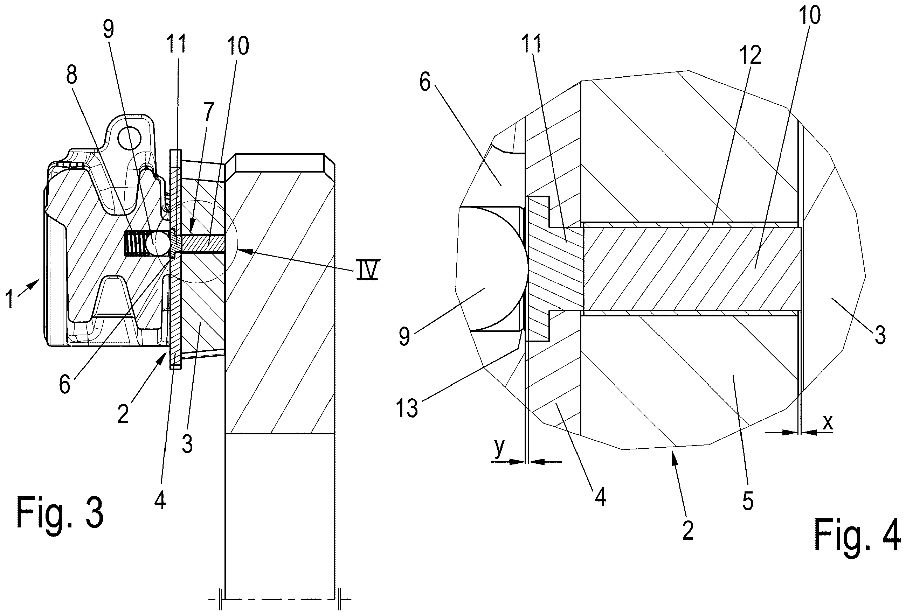

Wie Figur 3 sehr deutlich wiedergibt, ist zur Rückstellung des Bremssattels 1 nach einem Lösen der Bremse eine Rückstelleinrichtung 7 vorgesehen, mit einem Reibelement 10, das in Achsrichtung der Bremsscheibe 3 druckbelastet begrenzt verschiebbar in dem Bremsbelag 2 gehalten ist, wobei das Reibelement 10 unter Druck eines elastischen Druckelementes 8, im Beispiel in Form einer Schraubenfeder, steht. Das Reibelement 10 ist in einer aus Metall oder Keramik bestehenden Gleithülse 12 verschiebbar gelagert, die fest mit dem Reibbelag 5, oder in einer anderen Ausführungsform mit der Belagträgerplatte 4 verbunden ist.

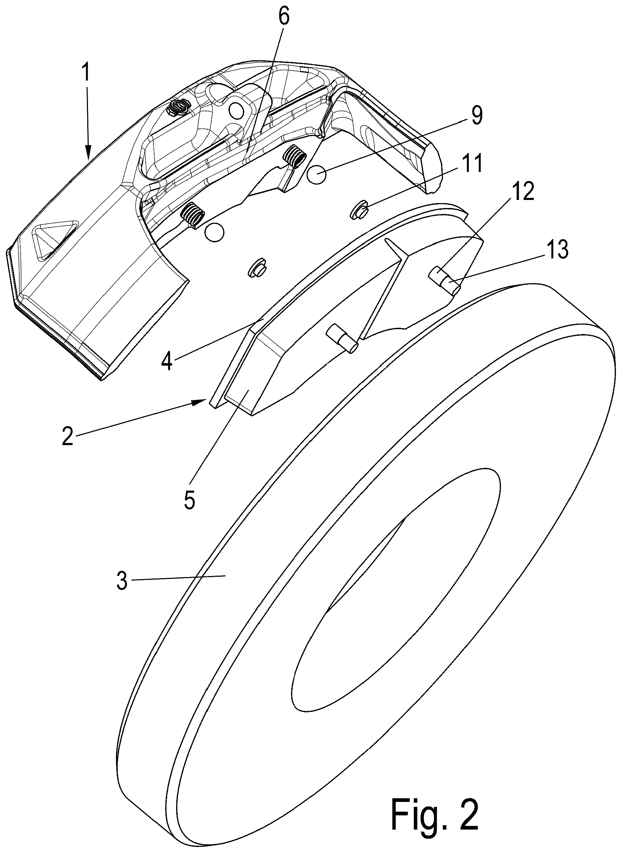

In der Figur 2 ist erkennbar, dass zwei Rückstelleinrichtungen 7 vorgesehen sind, die abständig zueinander angeordnet sind. Der Einfachheit halber wird im Folgenden lediglich eine Rückstelleinrichtung 7 beschrieben, wobei die zweite baugleich ist.

Die Verschiebung des Reibelementes 10 erfolgt durch einen Stößel 11, der in einer Aufnahme der Belagträgerplatte 4 ebenfalls axial beweglich gehalten ist und an einer zugeordneten Stirnseite des Reibelementes 10 damit fest verbunden ist, beispielsweise durch Verkleben oder Verpressen.

Zwischen dem Stößel 11 und dem Druckelement 8 ist gleichfalls im Bremssattelrücken 6 gelagert eine Kugel 9 positioniert, die sich einerseits am Stößel 11 und andererseits am Druckelement 8 abstützt und die eine Wegbegrenzung für das Druckelement 8 bildet, wozu die Ausnehmung, in der die Kugel 9 einliegt, auf der dem Stößel 11 zugewandten Seite einen Einzug 13 aufweist, beispielsweise durch Verstemmen.

In der Figur 4 ist der Bremsbelag 2 in einer Nichtfunktionsstellung, d. h. in ungebremster Position dargestellt. Hierbei ragt das Reibelement 10 über den Reibbelag 5 hinaus, wobei ein Überstand (X), z. B. 0,3 mm, kleiner oder gleich ist dem Abstand (Y) der von der Kugel 9 kontaktierten Auflagefläche des Stößels 11 zur Anlagefläche der Belagträgerplatte 4 am Bremssattelrücken 6. Dieser Abstand ist geringfügig kleiner als die Hälfte des theoretischen Lüftspiels und ist zum Beispiel 0,3 mm. Dieser Abstand von 0,3 mm wird durch die Höhe des Stößel 11 und die Tiefe der Aufnahme in der Belagträgerplatte 4 definiert, wobei die Kugel 9 der Sicherung des Druckelementes 8 dient.

Bei einer Montage des Bremsbelages 2 wird das Druckelement 8 zusätzlich vorgespannt. Im Fall eines mit dem Bremssattelrücken 6 fest verbundenem Bremsbelages 2, z. B. durch eine Schraubverbindung, ist der Überstand wesentlich größer als der definierte Weg des Stößels 11, wie gesagt der 0,3 mm.

Wird der Bremsbelag 2 hingegen nicht am Bremssattel 1 gehalten, darf der Überstand der Kugel 9 nicht größer als der definierte Stößelweg sein, da ansonsten der Bremsbelag über dem Stößel 11 in Richtung Bremsscheibe gedrückt würde.

Beim Lösen der Zuspannkraft drückt die gespeicherte Federenergie über den Stößel 11 das Reibelement 10 weiterhin gegen die Bremsscheibe 3. Die Rückstellkraft des Druckelementes 8 sorgt dafür, dass der verschiebbar gelagerte Bremssattel 1, sowie der verschiebbar gelagerte Bremsbelag 2, von der Bremsscheibe 3 fortgeschoben wird.

### Bezugszeichenliste

- 1: Bremssattel
- 2: Bremsbelag
- 3: Bremsscheibe
- 4: Belagträgerplatte
- 5: Reibbelag
- 6: Bremssattelrücken
- 7: Rückstelleinrichtung
- 8: Druckelement
- 9: Kugel
- 10: Reibelement
- 11: Stößel
- 12: Gleithülse
- 13: Einzug

## Patentansprüche

1. Scheibenbremse für ein Nutzfahrzeug, mit einem eine Bremsscheibe (3) übergreifenden, als Schiebesattel ausgebildeten Bremssattel (1), zwei darin angeordneten, gegensinnig bewegbaren, jeweils eine Belagträgerplatte (4) und einen darauf befestigten Reibbelag (5) aufweisenden Bremsbelägen, von denen ein aktionsseitiger mittels einer Zuspanneinrichtung über mindestens einen Bremsstempel gegen die Bremsscheibe (3) pressbar ist, sowie mindestens einer Rückstelleinrichtung (7), mit der der Bremssattel (1) nach einem bremsbedingten Verschieben und Lösen der Bremse rückführbar ist, **dadurch gekennzeichnet, dass** die Rückstelleinrichtung (7) mit einem in Achsrichtung der Bremsscheibe (3) druckbelastet begrenzt verschiebbar im Bremsbelag (2) gelagerten, beim Zuspannen und Lösen der Bremse an der Bremsscheibe (3) anliegenden Reibelement (10) versehen ist, an dem ein im Bremssattel (1) und/oder Bremsstempel gehaltenes elastisches Druckelement (8) angreift.

2. Scheibenbremse nach Anspruch 1, **dadurch gekennzeichnet, dass** das Reibelement (10) aus dem gleichen oder härterem Material wie der Reibbelag (5) besteht.

3. Scheibenbremse nach Anspruch 1 oder 2, **dadurch gekennzeichnet, dass** das Reibelement (10) in einer Gleithülse (12) gelagert ist, die aus Metall oder Keramik besteht und mit dem Reibbelag (5) oder der Belagträgerplatte (4) verbunden ist.

4. Scheibenbremse nach einem vorgehenden Anspruch, **dadurch gekennzeichnet, dass** mit dem Reibelement (10) ein Stößel (11) verbunden ist, der in einer Aufnahme der Belagträgerplatte (4) axial verschiebbar gehalten ist.

5. Scheibenbremse nach dem vorgehenden Anspruch, **dadurch gekennzeichnet, dass** das Reibelement (10) in Nichtfunktionsstellung der Bremse in Richtung der Bremsscheibe (3) über den Reibbelag (5) vorsteht und der Stößel (11) über einer Lagefläche der Belagträgerplatte (4) zum Bremssattel (1) mit Abstand in der Belagträgerplatte (4) einliegt

6. Scheibenbremse nach Anspruch 5, **dadurch gekennzeichnet, dass** der Überstand (X) des Reibelementes (10) kleiner oder gleich dem Abstand (Y) des Stößels (11) zur Anlagefläche der Belagträgerplatte (4) ist.

7. Scheibenbremse nach einem vorgehenden Anspruch, **dadurch gekennzeichnet, dass** an der dem Reibelement abgewandten Seite des Stößels (11) das Druckelement (8) oder ein Zwischenelement, vorzugsweise eine Kugel (9) anliegt.

8. Scheibenbremse nach Anspruch 7, **dadurch gekennzeichnet, dass** der Rückstellweg des Druckelementes (8) durch einen Einzug (13) der Aufnahme für das Druckelement (8) und die Kugel (9) begrenzt ist.

9. Scheibenbremse nach einem vorgehenden Anspruch, **dadurch gekennzeichnet, dass** das Druckelement (8) aus einer Druckfeder, insbesondere einer Schrauben-, Teller- oder Blattfeder oder einer Druckpatrone mit einem komprimierbaren Medium gefüllt, besteht.

10. Scheibenbremse nach Anspruch 6, **dadurch gekennzeichnet, dass** der Überstand (X) des Reibelementes (10) und der Abstand (Y) des Stößels (11) zur Anlagefläche der Belagträgerplatte (4) kleiner ist als die Hälfte des konstruktiven Lüftspiels.

## Claims

1. Disc brake for a utility vehicle, having a brake caliper (1) which reaches over a brake disc (3) and is configured as a sliding caliper, two brake linings which are arranged therein, can be moved in opposite directions and in each case have a lining carrier plate (4) and a friction lining (5) fastened thereon, of which an action-side friction lining (5) can be pressed against the brake disk (3) by means of a brake application device via at least one brake ram, and having at least one restoring device (7), by way of which the brake caliper (1) can be returned after a braking-induced displacement and release of the brake, **characterized in that** the restoring device (7) is provided with a friction element (10) which is mounted in the brake lining (2) such that it can be displaced to a limited extent in a pressure-loaded manner in the axial direction of the brake disc (3) and which bears against the brake disc (3) during application and release of the brake, on which friction element (10) an elastic pressure element (8) acts which is held in the brake caliper (1) and/or brake ram.

2. Disc brake according to Claim 1, **characterized in that** the friction element (10) is composed of the same material as or a harder material than the friction lining (5).

3. Disc brake according to Claim 1 or 2, **characterized in that** the friction element (10) is mounted in a sliding sleeve (12) which is composed of metal or ceramic and is connected to the friction lining (5) or the lining carrier plate (4).

4. Disc brake according to a preceding claim, **characterized in that** a plunger (11) which is held axially displaceably in a receptacle of the lining carrier plate (4) is connected to the friction element (10).

5. Disc brake according to the preceding claim, **characterized in that**, in the non-functional position of the brake, the friction element (10) projects beyond the friction lining (5) in the direction of the brake disc (3), and the plunger (11) lies in the lining carrier plate (4) at a spacing over a bearing face of the lining carrier plate (4) with respect to the brake caliper (1).

6. Disc brake according to Claim 5, **characterized in that** the projection (X) of the friction element (10) is smaller than or equal to the spacing (Y) of the plunger (11) from the bearing face of the lining carrier plate (4).

7. Disc brake according to a preceding claim, **characterized in that** the pressure element (8) or an intermediate element, preferably a ball (9), bears against that side of the plunger (11) which faces away from the friction element.

8. Disc brake according to Claim 7, **characterized in that** the restoring travel of the pressure element (8) is delimited by a reduced portion (13) of the receptacle for the pressure element (8) and the ball (9).

9. Disc brake according to a preceding claim, **characterized in that** the pressure element (8) consists of a compression spring, in particular a helical, disc or leaf spring or a pressurized cartridge filled with a compressible medium.

10. Disc brake according to Claim 6, **characterized in that** the projection (X) of the friction element (10) and the spacing (Y) of the plunger (11) from the bearing face of the lining carrier plate (4) are smaller than half the structural air play.

## Revendications

1. Frein à disque pour un véhicule utilitaire, comprenant un étrier de frein (1) conçu en forme d'un étrier glissant et chevauchant un disque de frein (3), ainsi que deux garnitures de frein munis d'une plaque d'appui d'une garniture respective (4) et une garniture de friction respective (5) y fixée, qui sont disposées dans ledit étrier et mobiles en sens contraires, dont une garniture du côté d'action est apte à être pressée moyennant un moyen de serrage via au moins un tampon de freinage contre ledit disque de frein (3), et comprenant au moins un moyen de rappel (7) servant à retourner ledit étrier de frein (1) après un déplacement et desserrage du frein, qui est induit par le freinage, **caractérisé en ce que** ledit moyen de rappel (7) est muni d'un élément de friction portant contre ledit disque de frein (3) au cas de serrage et desserrage du frein, qui est appuyé dans ladite garniture de frein (2) pour un déplacement limité, chargé en pression, le long de la direction axiale dudit disque de frein (3).

2. Frein à disque selon la revendication 1, **caractérisé en ce que** ledit élément de friction (10) consiste en le même matériau ou un matériau plus dur que le matériau de ladite garniture de friction (5).

3. Frein à disque selon la revendication 1 ou 2, **caractérisé en ce que** ledit élément de friction (10) est logé dans un manchon coulissant (12) consistant en métal ou céramique et relié à ladite garniture de friction (5) ou ladite plaque d'appui d'une garniture (4).

4. Frein à disque selon une quelconque des revendications précédentes, **caractérisé en ce qu'**un coulisseau (11) est relié audit élément de friction (10), qui est retenu de manière axialement déplaçable dans un récepteur de ladite plaque d'appui d'une garniture (4).

5. Frein à disque selon la revendication précédente, **caractérisé en ce qu'**en position de non-fonctionnement du frein, ledit élément de friction (10) fait saillie de ladite garniture de friction (5) en une direction vers ledit disque de frein (3), et **en ce que** ledit coulisseau (11) est noyé dans ladite plaque d'appui d'une garniture (4) via une surface de palier de ladite plaque d'appui d'une garniture (4) à un écart dudit étrier de frein (1)

6. Frein à disque selon la revendication 5, **caractérisé en ce que** la saillie (X) dudit élément de friction (10) est plus petite que ou égale à l'écart (Y) dudit coulisseau (11) de la surface d'appui de ladite plaque d'appui d'une garniture (4).

7. Frein à disque selon une quelconque des revendications précédentes, **caractérisé en ce que** l'élément presseur (8) ou un élément intermédiaire, de préférence une bille (9), porte contre le côté dudit coulisseau, qui est opposé audit élément de friction.

8. Frein à disque selon la revendication 7, **caractérisé en ce que** la course de retour dudit élément presseur (8) est limitée par un élément rentrant (13) du récepteur pour ledit élément presseur (8) et ladite bille (9).

9. Frein à disque selon une quelconque des revendications précédentes, **caractérisé en ce que** ledit élément presseur (8) consiste en un ressort de compression, en particulier un ressort hélicoïdal, une rondelle Belleville ou un ressort à lame ou une cartouche de pression remplie d'un milieu compressible.

10. Frein à disque selon la revendication 6, **caractérisé en ce que** ladite saillie (X) dudit élément de friction (10) et ledit écart (Y) dudit coulisseau (11) de la surface de support de ladite plaque d'appui d'une garniture (4) sont plus petits que la moitié du jeu constructif.
